# FASCICULE DE BREVET EUROPEEN

(11) **EP 1 651 424 B1**
(45) Date de publication et mention de la délivrance du brevet: **13.06.2007**
(21) Numéro de dépôt: 04766248.1
(22) Date de dépôt: 16.07.2004
(51) Int. Cl.: B29C 65/16, B32B 3/12, B32B 27/00

(54) **PROCEDE POUR L'ASSEMBLAGE DES ELEMENTS D'UNE STRUCTURE COMPRENANT UNE AME EN NID D'ABEILLE**
VERFAHREN ZUM MONTIEREN VON ELEMENTEN EINER EINEN WABENKERN UMFASSENDEN KONSTRUKTION
METHOD FOR ASSEMBLING ELEMENTS OF A STRUCTURE COMPRISING A HONEYCOMB CORE

(30) Priorité: 18.07.2003 FR 0308843
(43) Date de publication de la demande: 03.05.2006
(73) Titulaire: SOLVAY (SOCIETE ANONYME), 1050 Bruxelles (BE)
(72) Inventeur: DEHENNAU, Claude, B-1410 WATERLOO (BE); GRANDJEAN, Dominique, B-1020 BRUXELLES (BE)
(74) Mandataire: Jacques, Philippe
(86) Numéro de dépôt international: PCT/EP2004/051526
(87) Numéro de publication internationale: WO 2005/014265

(56) Documents cités:
- WO-A-00/32382
- FR-A- 2 760 999
- US-A1- 2003 132 554
- PATENT ABSTRACTS OF JAPAN vol. 017, no. 607 (M-1507), 9 novembre 1993 (1993-11-09) -& JP 05 185258 A (NIPPON STEEL CORP), 27 juillet 1993 (1993-07-27)
- PATENT ABSTRACTS OF JAPAN vol. 015, no. 212 (M-1118), 30 mai 1991 (1991-05-30) -& JP 03 058829 A (SHOWA AIRCRAFT IND CO LTD), 14 mars 1991 (1991-03-14)
- PATENT ABSTRACTS OF JAPAN vol. 012, no. 236 (M-715), 6 juillet 1988 (1988-07-06) & JP 63 030233 A (DAINIPPON PRINTING CO LTD), 8 février 1988 (1988-02-08)

## Description

La présente invention concerne un procédé pour l'assemblage d'une structure à base de matière plastique comprenant une âme en nid d'abeille.

Dans de nombreuses industries (automobile, constructions civiles, navales...), on cherche à optimiser le rapport propriétés mécaniques/poids des structures utilisées. De nombreux procédés ont été mis au point pour réaliser cet objectif et l'un des plus courants consiste à utiliser une structure alvéolaire en nid d'abeille éventuellement en sandwich entre deux plaques dites de finition. En combinant cette technique avec le choix d'un matériau léger (polymère plutôt que métal), on peut obtenir des structures particulièrement légères.

Pour être économiquement rentables, ces structures doivent être réalisées avec des procédés simples, rapides et incluant le moins d'étapes possibles et de ce point de vue, le choix des polymères (et en particulier, des polymères thermoplastiques) comme matériaux constitutifs est également judicieux. En effet, compte tenu de leur thermoplasticité, ces matériaux peuvent être façonnés en une structure en nid d'abeille en une seule étape, voire en deux étapes maximum.

Ainsi, un procédé pour la fabrication de structures alvéolaires par extrusion continue a été proposé dans la demande FR 2760999, tandis que la demande WO 00/32382 décrit un procédé d'obtention de telles structures par thermoformage et pliage d'une feuille façonnée au préalable. Pour réaliser l'assemblage de telles structures, on utilise généralement soit un adhésif (dans WO 00/32382 : à la fois pour souder les alvéoles du nid d'abeille et pour fixer les plaques de finition) soit des méthodes de soudure classiques (FR 2760999). Ces méthodes présentent toutefois l'inconvénient d'être lentes et de nécessiter au moins 2 étapes : d'abord l'enduction de l'adhésif ou le préchauffage des éléments à souder, et puis l'assemblage. En outre, l'assemblage se faisant sous une pression relativement importante dans les deux cas, on assiste souvent à un affaissement et/ou à une déformation des alvéoles du nid d'abeille.

US-A-2003/132554 décrit un procédé de soudage de collecteur d'admission.

La présente invention a dès lors pour objectif de fournir un procédé pour l'assemblage d'une structure à base de matière plastique avec âme en nid d'abeille, qui est rapide et ne provoque pas de déformation ni d'affaissement des alvéoles du nid d'abeille.

A cet effet, la présente invention concerne un procédé pour l'assemblage des éléments d'une structure comprenant une âme alvéolaire en nid d'abeille par soudure à l'aide d'un rayonnement électromagnétique, selon lequel la structure est à base d'une matière plastique transparente au rayonnement électromagnétique et au moins un des éléments à assembler comprend au voisinage d'au moins une partie de sa surface, une couche absorbant au moins partiellement le rayonnement électromagnétique, la soudure se faisant par fusion de cette couche au moyen du rayonnement électromagnétique dans les zones de soudure.

Le procédé selon l'invention assure une soudure précise, rapide des plaques de finitions sans affaissement des alvéoles du nid d'abeille puisque seul la couche absorbant le rayonnement électromagnétique est fondue. En outre, par rapport aux méthodes de soudure classiques (qui impliquent généralement le chauffage d'une grande partie de la structure à une température élevée), il permet l'utilisation de plaques de finition mono ou bi orientées.

Par « nid d'abeille », on entend désigner un objet généralement plan (plaque) comprenant des alvéoles, c.à.d. des cellules ouvertes ou fermées ayant une section quelconque, généralement circulaire ou hexagonale, avec des parois essentiellement parallèles d'une cellule à l'autre.

Par plaques de finition, on entend des plaques qui sont posées de part et d'autre de la surface du nid d'abeille pour le fermer et produire ainsi des panneaux. Lorsque des plaques mono ou biorientées sont soudées au nid d'abeille, on observe que la couche absorbant le rayonnement électromagnétique entoure partiellement l'extrémité de la paroi verticale adjacente du nid d'abeille et assure ainsi un encrage supérieur à celui qui serait obtenu par des techniques traditionnelles d'assemblage telle que le collage ou la soudure thermique, et ce sans nuire aux propriétés mécaniques supérieures conférées par l'orientation. Par plaques mono ou biorientées, on entend :
- pour les polymères amorphes (comme le PVC, le PET, le PC), des plaques orientées à une température comprise entre la température de transition vitreuse plus de 2 à 30°C ;
- pour les polymères semi cristallins (comme les PA, les PO), des plaques orientées à une température comprise entre la température de cristallisation diminuée de 2 à 50°C.

Selon l'invention, la structure à assembler est à base de matière plastique. On entend par là que tous les éléments à assembler sont principalement à base de matière plastique (c.à.d. qu'ils ont une fraction pondérale en matière plastique majoritaire, ce qui n'exclut pas la présence d'inserts, renforts... d'une autre nature). De préférence, ils sont à base de la même matière plastique ou d'une matière plastique similaire (de même nature ou compatible avec celle-ci) pour favoriser leur soudure.

Par matière plastique, on entend désigner tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

Tout type de polymère ou de copolymère thermoplastique dont la température de fusion est inférieure à la température de décomposition convient. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut utiliser des polyoléfines, des polyhalogénures de vinyle (PVC), des polyesters thermoplastiques, des polycétones, des polyamides et leurs copolymères. Les polyoléfines (et en particulier le polypropylène (PP)) et le PVC ont donné de bons résultats. Un mélange de polymères ou de copolymères peut aussi être utilisé, de même qu'un mélange de matières polymériques avec des additifs divers (stabilisants ; plastifiants ; charges inorganiques, organiques et/ou naturelles ou polymériques...). La matière plastique peut également avoir subi des traitements divers tels que expansion, orientation...

Dans le procédé selon l'invention, il importe que la matière plastique soit transparente au rayonnement électromagnétique et ce afin de permettre le cheminement du rayonnement vers la couche absorbant le rayonnement électromagnétique à travers le coeur des éléments à assembler et afin d'éviter que trop de matière plastique ne soit fondue ailleurs que dans la couche absorbant le rayonnement électromagnétique. Selon l'invention, la couche absorbe au moins partiellement le rayonnement électromagnétique et est située au voisinage d'au moins une partie de la surface d'au moins un des éléments à assembler et qui englobe la (ou les) zone(s) de soudure.

Par l'expression « au voisinage d'au moins une partie de la surface », on entend que la couche est située soit directement à la surface, sur une partie de celle-ci au moins, soit directement en dessous de la surface, c.à.d qu'elle est alors située sous une couche de matière qui peut être de même nature que le coeur de l'élément à assembler, soit de nature différente (couche de protection par exemple). La première alternative, selon laquelle la couche est située directement en surface, est préférée et dans ce cas, on veille à fondre cette couche de manière ciblée. Dans le second cas, on veille généralement à ce que la couche de surface située sur la couche absorbante ne soit pas trop épaisse car elle doit être fondue également pour pouvoir réaliser la soudure.

La couche absorbante peut être incorporée à l'élément à souder par tout moyen approprié : coextrusion, collage, enduction... La coextrusion est une méthode économique, qui donne généralement de bons résultats. Il importe de noter que cette couche peut être continue ou discontinue (par exemple constituée de bandes qui ne sont présentes que dans les régions à souder). On préfère généralement qu'elle soit continue, par simplicité de fabrication.

Généralement, cette couche est à base de la même matière plastique que l'élément à assembler, ou d'une matière plastique similaire (ayant des monomères de même nature et/ou compatibles), mais elle contient des additifs absorbant le rayonnement électromagnétique.

Par le vocable « transparente » (qui s'applique à la matière plastique telle que définie ci-dessus), on désigne une matière plastique qui absorbe une quantité d'énergie inférieure ou égale à 100 J/g de matière plastique tandis que par « absorbant », on veut dire qui absorbe une quantité d'énergie supérieure ou égale à 300 J/g de matière. Ce niveau d'absorption peut être atteint moyennant l'utilisation de certains pigments tel que le noir de carbone, qui donne généralement de bons résultats.

Selon un mode de réalisation préféré du procédé selon l'invention, le rayonnement électromagnétique utilisé a une longueur d'onde supérieure ou égale à 700 nm. De même, on préfère utiliser un rayonnement électromagnétique dont la longueur d'onde est inférieure ou égale à 1200 nm.

De manière particulièrement préférée, le rayonnement électromagnétique est un rayonnement infrarouge. Une source IR à spectre continu sur l'ensemble de la gamme de fréquences émises peut convenir, en particulier les sources émettant principalement dans la gamme des longueurs d'onde non absorbées par la matière plastique. De telles sources IR sont par exemple celles à très courte longueur d'onde, telles que celles émettant aux environs de 1000 nm.

Les meilleurs résultats ont été obtenus avec un rayonnement infrarouge cohérent de type laser. Des exemples de sources d'un tel rayonnement sont les lasers à diode et les lasers Nd:YAG (laser à grenat d'aluminate d'yttrium dopé au néodyme). Il s'agit de préférence d'un laser à diode étant donné la disponibilité commerciale et relativement économique de lasers de ce type ayant une puissance élevée.

Selon l'invention, la structure comprend plusieurs éléments à assembler qui peuvent être des parties de l'âme en nid d'abeille (ses alvéoles par exemple), des plaques de finition situées de part et d'autre de l'âme (perpendiculairement à ses parois), ainsi que d'autres éléments tels que fixation(s), poignée(s), renfort(s)...

Dans le cas où l'âme en nid d'abeille est obtenue par une procédé menant à des alvéoles qui ne sont pas soudées (tel qu'avec certaines variantes du procédé décrit dans la demande WO 00/32382 par exemple, et dont le contenu est inclus par référence dans la présente demande), le procédé selon l'invention peut être utilisé afin de souder ces alvéoles. Aussi, selon une variante du procédé selon l'invention, les éléments à souder au moyen du rayonnement électromagnétique sont en partie constituées des alvéoles de l'âme qui a été obtenue par thermoformage et pliage d'une feuille en matière plastique et qui comporte la couche absorbant le rayonnement électromagnétique sur ses deux faces.

Ainsi qu'évoqué précédemment, il est avantageux de munir les deux faces d'un nid d'abeille de plaques de finition pour en augmenter la résistance mécanique de la structure (notamment en flexion et en compression). La fixation de ces plaques peut alors se faire par le procédé décrit précédemment. Par conséquent, selon une autre variante avantageuse du procédé selon l'invention, les éléments à souder au moyen du rayonnement électromagnétique comprennent deux plaques de finition qui sont soudées de part et d'autre de l'âme, perpendiculairement aux parois des alvéoles. De manière préférée, ces plaques sont orientées et de manière tout particulièrement préférée, elles sont bi orientées

Lorsque le procédé de fabrication de l'âme est un procédé continu, menant à des nids d'abeille de longueur indéfinie, le procédé d'assemblage selon l'invention est avantageusement réalisé en ligne avec la fabrication de l'âme.

Ainsi par exemple, lorsque l'âme est obtenue par un procédé continu d'extrusion utilisant une extrudeuse suivie d'un dispositif de refroidissement (tel que celui décrit dans la demande FR 2760999 par exemple, dont le contenu est également incorporé par référence dans la présente demande), le procédé selon la présente invention peut être utilisé pour souder des plaques de finition de part et d'autre de l'âme dès sa sortie du dispositif de refroidissement. Dans ce cas, lesdites plaques de finition sont munies sur une seule de leurs faces (et au voisinage de leur surface), d'une couche absorbant le rayonnement électromagnétique, l'âme et les plaques elles-mêmes étant de préférence transparentes à ce rayonnement.

De même, lorsque l'âme est obtenue par un procédé impliquant le thermoformage et le pliage d'une feuille et éventuellement l'assemblage (par soudure, collage ou toute autre technique appropriée) des alvéoles ainsi formées (tel que décrit dans la demande WO 00/32382 par exemple), le procédé selon la présente invention peut être utilisé pour souder des plaques de finition de part et d'autre de l'âme dès sa sortie du dispositif d'assemblage des alvéoles.

Lorsque cet assemblage a également lieu par soudure au moyen d'un rayonnement électromagnétique et que donc, l'âme porte une couche absorbant le rayonnement électromagnétique, les plaques de finition ne doivent même pas être munies d'une telle couche. Par conséquent, selon une variante de l'invention, le procédé de fabrication continu de l'âme est un procédé de thermoformage et pliage d'une feuille comprenant de part et d'autre la couche absorbant le rayonnement électromagnétique pour former des alvéoles non soudées qui sont assemblées par soudure au moyen du rayonnement électromagnétique, et en ligne avec cette soudure, on vient fixer de part et d'autre de cette âme, deux plaques de finition exemptes de couche absorbant le rayonnement électromagnétique. Le laser est positionné suivant un angle choisi en fonction de l'épaisseur de l'âme. L'ensemble, âme et plaque de finition, est soumis au rayonnement électromagnétique. L'ensemble des soudures s'effectue dès lors en une seule opération continue, qui peut éventuellement utiliser plus d'un laser à la fois en fonction de la largeur à souder.

Alternativement, soit l'assemblage des alvéoles peut avoir lieu par collage, soit les alvéoles restent non soudées. Ainsi, selon cette variante de l'invention, le procédé continu de fabrication de l'âme est un procédé de thermoformage et pliage d'une feuille pour former des alvéoles qui soit restent non soudées, soit sont assemblées par collage au moyen d'une colle sans solvant appliquée par enduction à la surface de la feuille dans les zones à coller ; et en ligne avec ce collage, on vient fixer de part et d'autre de l'âme, deux plaques de finition ayant une couche absorbant le rayonnement électromagnétique sur une seule de leurs faces. On choisira de préférence une colle thixotrope présentant une force d'adhérence importante dès la mise en contact des parois à souder pour assurer la tenue globale de l'âme.

La présente invention est illustrée de manière non limitative par les exemples suivants :

### Exemple 1

On a assemblé les éléments suivants :
- un nid d'abeille à base de résine PP MOPLEN ® 640P ayant des alvéoles de 8 mm x 13 mm et une hauteur de 20 mm, obtenu par un procédé d'extrusion continu selon la demande FR 2760999 ;
- deux plaques de finition d'une épaisseur de 3 mm à base de résine PP ELTEX® RF 110 ayant en surface une couche coextrudée à base de résine RF 110 ELTEX® contenant 5 pcr de noir de carbone REMAFIN SCHWARZ ® PAP d'une épaisseur de 50 µm ;
au moyen d'un laser FAP COHERENT ® 40A(35W) CW avec objectif collimaté, d'une longueur d'onde de 810 nm et présentant une bande spectrale de l'ordre de 3 nm.

Une vitesse linéaire de soudure de 0.3 m/min (par pas de 5 mm) a pu être atteinte sans problème (soudure correcte d'après examen sur coupe microtomique).

Des essais de résistance en flexion 3 points ont été réalisé sur un échantillon d'une portée de 210 mm prélevé dans la structure soudée. La vitesse de la traverse était de 20 mm/min et les charges mesurées aux différents déplacements étaient :

| Déplacement (mm) | Charge (N) |
|---|---|
| 1 | 99.4 |
| 2 | 201 |
| 3 | 300 |

Le déplacement maximal mesuré était de 17 mm pour une charge de 966 N, ce qui se traduit par une déformation de 5%.

### Exemple 2

On a assemblé les éléments suivants :
- un nid d'abeille à base de résine PVC rigide ayant des alvéoles hexagonales régulières de 3 mm de côté et de 8 mm de hauteur obtenu par un procédé selon la demande WO 00/32382 par thermoformage et pliage d'une feuille de 150 µm d'épaisseur ;
- deux plaques de finition d'une épaisseur de 2 mm à base de PVC rigide mono orienté (résine 267RB de SOLVIN) ayant en surface une couche coextrudée à base de la même formulation contenant 4 pcr de noir de carbone d'une épaisseur de 50 µm ;
au moyen d'un laser FAP COHERENT ® 40A(35W) CW avec objectif collimaté, d'une longueur d'onde de 810 nm et présentant une bande spectrale de l'ordre de 3 nm.

Une vitesse linéaire de soudure de 1.5 m/min (par pas de 5 mm) a pu être atteinte sans problème.

Des essais de résistance en flexion 3 points ont été réalisé sur un échantillon d'une portée de 150 mm prélevé dans la structure soudée. La vitesse de la traverse était de 2 mm/min et les charges mesurées aux différents déplacements étaient:

| Déplacement (mm) | Charge (N) |
|---|---|
| 1 | 136 |
| 2 | 267 |
| 3 | 386 |

Le déplacement maximal mesuré était de 5.2 mm pour une charge de 511 N, ce qui se traduit par une déformation de 1.7 %.

## Revendications

1. Procédé pour l'assemblage des éléments d'une structure à base d'une matière plastique transparente au rayonnement laser comprenant une âme alvéolaire en nid d'abeille et deux plaques de finition de part et d'autre de l'âme, perpendiculairement aux parois des alvéoles, selon lequel au moins les plaques de finition et l'âme sont assemblées par soudure à l'aide d'un rayonnement laser, et au moins un des éléments à assembler comprend au voisinage d'au moins une partie de sa surface, une couche absorbant au moins partiellement le rayonnement laser, la soudure se faisant par fusion de cette couche au moyen du rayonnement laser dans les zones de soudure.

2. Procédé selon la revendication précédente, **caractérisé en ce que** la matière plastique est un PP ou un PVC.

3. Procédé selon l'une quelconque des revendications précédentes, **caractérisé en ce que** les éléments à souder au moyen du rayonnement laser comprennent en outre les alvéoles de l'âme, **en ce que** celle-ci a été obtenue par thermoformage et pliage d'une feuille en matière plastique dont la couche absorbant le rayonnement laser est située de part et d'autre de cette feuille.

4. Procédé selon l'une quelconque des revendications précédentes, **caractérisé en ce que** l'âme est obtenue par un procédé de fabrication continu et **en ce que** la soudure des plaques au moyen du rayonnement laser a lieu en ligne avec ce procédé de fabrication.

5. Procédé selon la revendication précédente, **caractérisé en ce que** le procédé de fabrication continu de l'âme est un procédé d'extrusion et **en ce que** la couche absorbant le rayonnement laser est située sur une seule face de chacune des deux plaques.

6. Procédé selon la revendication 4, **caractérisé en ce que** le procédé de fabrication continu de l'âme est un procédé de thermoformage et pliage d'une feuille comprenant de part et d'autre la couche absorbant le rayonnement laser pour former des alvéoles non soudées, **en ce que** les alvéoles non soudées sont assemblées par soudure au moyen du rayonnement laser et **en ce que** les deux plaques de finition sont exemptes de couche absorbant le rayonnement électromagnétique.

7. Procédé selon la revendication 4, **caractérisé en ce que** le procédé continu de fabrication de l'âme est un procédé de thermoformage et pliage d'une feuille pour former des alvéoles non soudées, **en ce que** les alvéoles restent non soudées mais sont éventuellement assemblées par collage au moyen d'une colle sans solvant appliquée par enduction à la surface de la feuille dans les zones à coller et **en ce que** la couche absorbant le rayonnement laser est située sur une seule face de chacune des deux plaques de finition.

8. Procédé selon l'une quelconque des revendications précédentes, **caractérisé en ce que** les plaques sont mono ou biorientées.

## Claims

1. Method of assembling the elements of a structure based on a plastic transparent to laser radiation, comprising a cellular honeycomb core and two skins on either side of the core, perpendicular to the walls of the cells, in which at least one of the skins and the core are assembled by welding using laser radiation, and at least one of the elements to be assembled comprises, in the vicinity of at least one part of its surface, a layer that at least partly absorbs the laser radiation, the welding taking place by the melting of this layer by means of the laser radiation in the weld zones.

2. Method according to the preceding claim, **characterized in that** the plastic is a PP or a PVC.

3. Method according to either of the preceding claims, **characterized in that** the elements to be welded by means of the laser radiation further include the cells of the core and **in that** the latter is obtained by the thermoforming and folding of a plastic sheet, the laser-radiation-absorbent layer of which is located on either side of this sheet.

4. Method according to any one of the preceding claims, **characterized in that** the core is obtained by a continuous manufacturing process and **in that** the welding of the skins by means of the laser radiation takes place in line with this manufacturing process.

5. Method according to the preceding claim, **characterized in that** the continuous process for manufacturing the core is an extrusion process and **in that** the laser-radiation-absorbent layer is located on only one face of each of the two skins.

6. Method according to Claim 4, **characterized in that** the continuous process for manufacturing the core is a process involving the thermoforming and folding of a sheet that includes, on either side, the laser-radiation-absorbent layer in order to form unwelded cells, and **in that** the unwelded cells are assembled by welding using the laser radiation and **in that** the two skins do not contain the radiation-absorbent layer.

7. Method according to Claim 4, **characterized in that** the continuous process for manufacturing the core is a process involving the thermoforming and folding of a sheet in order to form unwelded cells, **in that** the cells remain unwelded but are optionally assembled by bonding using a solvent-free adhesive applied by coating the surface of the sheet in the zones to be bonded and **in that** the laser-radiation-absorbent layer is located on only one face of each of the two skins.

8. Method according to any one of the preceding claims, **characterized in that** the skins are uniaxially or biaxially oriented.

## Patentansprüche

1. Verfahren zum Montieren von Elementen einer Konstruktion auf Basis von für Laserstrahlung durchlässigem Kunststoff, mit einem Wabenkern und zwei Endplatten zu beiden Seiten des Wabenkernes senkrecht zu Wänden der Waben, bei welchem zumindest die Endplatten und der Wabenkern durch Laserstrahlschweißung zusammengebaut werden, und zumindest eines der zusammenzubauenden Elemente in der Nähe zumindest eines Teiles seiner Oberfläche eine die Laserstrahlung zumindest teilweise absorbierende Schicht aufweist, wobei die Schweißung durch Schmelzen dieser Schicht mit Hilfe der Laserstrahlung in den Schweißzonen erfolgt.

2. Verfahren nach dem vorhergehenden Anspruch, **dadurch gekennzeichnet, daß** das Kunststoffmaterial ein PP oder ein PVC ist.

3. Verfahren nach einem der vorhergehenden Ansprüche, **dadurch gekennzeichnet, daß** die mit Hilfe der Laserstrahlung zu verschweißenden Elemente einen Wabenkern aufweisen, und daß dieser durch Thermoformung und Faltung einer Folie aus Kunststoff gebildet wird, deren die Laserstrahlung absorbierende Schicht zu beiden Seiten dieser Folie liegt.

4. Verfahren nach einem der vorhergehenden Ansprüche, **dadurch gekennzeichnet, daß** der Wabenkern durch ein kontinuierliches Herstellungsverfahren erhalten wird, und daß das Schweißen der Platten mit Hilfe der Laserstrahlung in einer Straße mit dem Herstellungsverfahren erfolgt.

5. Verfahren nach dem vorhergehenden Anspruch, **dadurch gekennzeichnet, daß** das kontinuierliche Herstellungsverfahren des Wabenkernes ein Extrusionsverfahren ist, und daß die die Laserstrahlung absorbierende Schicht nur auf einer einzigen Seite jeder der beiden Platten vorgesehen ist.

6. Verfahren nach Anspruch 4, **dadurch gekennzeichnet, daß** das kontinuierliche Herstellungsverfahren des Wabenkernes ein Verfahren zur Thermoformung und Faltung einer Folie ist, die zu beiden Seiten die die Laserstrahlung absorbierende Schicht aufweist, um nicht verschweißte Waben zu bilden, daß die nicht verschweißten Waben durch Schweißung mit Hilfe der Laserstrahlung zusammengebaut werden, und daß die beiden Endplatten frei von einer elektromagnetische Strahlung absorbierenden Schicht sind.

7. Verfahren nach Anspruch 4, **dadurch gekennzeichnet, daß** das kontinuierliche Herstellungsverfahren des Wabenkernes ein Verfahren zur Thermoformung und Faltung einer Folie ist, um nicht verschweißte Waben zu formen, daß die nicht verschweißten Waben gegebenenfalls durch Klebung mit Hilfe eines Klebstoffes ohne Lösungsmittel zusammengebaut werden, der auf eine Fläche der Folie in der zu verklebenden Zone aufgebracht wird, und daß die die Laserstrahlung absorbierende Schicht nur auf einer einzigen Seite jeder der beiden Endplatten vorgesehen ist.

8. Verfahren nach einem der vorhergehenden Ansprüche, **dadurch gekennzeichnet, daß** die Platten mono- oder biorientierte Platten sind.
